# EUROPEAN PATENT APPLICATION

(11) **EP 4 803 579 A1**
(43) Date of publication of application: **09.09.2026**
(21) Application number: 24885843.3
(22) Date of filing: 31.10.2024
(51) Int. Cl.: C08L 83/07, C08K 9/10, C08L 83/04, C08L 83/05

(54) **CURABLE ORGANOPOLYSILOXANE COMPOSITION AND USE OF SAME**

(30) Priority: 02.11.2023 JP 2023188767
(71) Applicant: Dow Toray Co., Ltd., Tokyo 140-8617 (JP)
(72) Inventor: YAMAMOTO, Shinichi, Ichihara-shi, Chiba 299-0108 (JP); YAMAZAKI, Ryosuke, Ichihara-shi, Chiba 299-0108 (JP)
(74) Representative: Elkington and Fife LLP
(86) International application number: PCT/JP2024/038939
(87) International publication number: WO 2025/095077

(57) **Abstract**

The present invention provides: a novel curable organopolysiloxane composition that can be used to manufacture semiconductor components and the like. A curable organopolysiloxane composition containing: (A1) an organopolysiloxane not having a curing-reactive functional group that contains an aliphatic unsaturated bond in a molecule and containing a siloxane unit expressed by SiO_{4/2} in an amount of at least 20 mol% of all siloxane units; (A2) an organopolysiloxane having at least one monovalent hydrocarbon group that contains an aliphatic unsaturated bond in a molecule; (B) an organohydrogenpolysiloxane containing at least two silicon atom-bonded hydrogen atoms in one molecule; (C) a first hydrosilylation catalyst exhibiting activity upon irradiation with a high-energy beam; and (D) a second hydrosilylation catalyst microencapsulated by a thermoplastic resin having a softening point in the temperature range from 50 to 200°C.

## Description

### TECHNICAL FIELD

The present invention relates to: a curable organopolysiloxane composition containing two different types of hydrosilylation reaction catalysts; a method for manufacturing an organopolysiloxane cured product that is cured by a hydrosilylation reaction; a method for manufacturing a semiconductor component or display device; and the like.

### BACKGROUND ART

Organopolysiloxane compositions that have a curing mechanism when irradiated with a high-energy beam such as UV or when heated are known for use in the manufacturing of semiconductor components and the like (see, for example, Patent Documents 1 to 4).
Also known is a dual-cure type organopolysiloxane composition that has two curing mechanisms: irradiation with a high-energy beam and heating (see, for example, Patent Document 5). Dual-cure type organopolysiloxane compositions generally become a gel-like semi-cured product upon irradiation with a high-energy beam, and are temporarily fixed to a base material. Furthermore, the semi-cured product is heated to obtain a final cured product. The dual-cure type organopolysiloxane composition undergoes this two-stage process, and thus has the advantage in which various processes such as assembly can be easily performed after temporary fixing to the base material and before heating. However, it has been confirmed that the technology of Patent Document 5 has room for improvement in terms of the temporary fixing force to a base material.

### RELATED ART DOCUMENTS

### PATENT DOCUMENTS

Patent Document 1: WO 2019/208756 A1
Patent Document 2: JP 2006-177989 A
Patent Document 3: JP 2017-110137 A
Patent Document 4: JP H9-67440 A
Patent Document 5: WO 2022/004463 A1

### SUMMARY OF THE INVENTION

### PROBLEM TO BE SOLVED BY THE INVENTION

The present invention provides: a novel curable organopolysiloxane composition that can be used to manufacture semiconductor components and other components; and the like.

### MEANS FOR SOLVING THE PROBLEM

The present inventors conducted research on the basis of the novel concept of improving manufacturing efficiency in the manufacturing of a semiconductor component or the like using a dual-cure type organopolysiloxane composition by adjusting the adhesion development properties of a semi-cured product of the composition, resulting in the arrival of the discovery of the invention having the following features.
In other words, the present invention provides the following curable organopolysiloxane composition and the like.
[1] A curable organopolysiloxane composition, containing:
   (A1) an organopolysiloxane not having a curing-reactive functional group that contains an aliphatic unsaturated bond in a molecule and containing a siloxane unit expressed by SiO_{4/2} in an amount of at least 20 mol% of all siloxane units;
   (A2) an organopolysiloxane having at least one monovalent hydrocarbon group that contains an aliphatic unsaturated bond in a molecule;
   (B) an organohydrogenpolysiloxane containing at least two silicon atom-bonded hydrogen atoms in one molecule;
   (C) a first hydrosilylation catalyst exhibiting activity upon irradiation with a high-energy beam; and
   (D) a second hydrosilylation catalyst microencapsulated by a thermoplastic resin having a softening point in the temperature range from 50 to 200°C.
[2] The curable organopolysiloxane composition according to [1], wherein component (A1) is an organopolysiloxane expressed by the following average unit formula (1):

   (R¹₃SiO_{1/2})ₐ(R¹₂SiO_{2/2})_{b}(R¹SiO_{3/2})_{c}(SiO_{4/2})_{d}(R²O_{1/2})ₑ (1)

   (where each R¹ independently represents a monovalent hydrocarbon group with 1 to 10 carbon atoms and no aliphatic unsaturated bonds; R² represents a hydrogen atom or an alkyl group with 1 to 10 carbon atoms; and a, b, c, d, and e are numbers that satisfy the following: 0.35 ≤ a ≤ 0.70, 0 ≤ b ≤ 0.20, 0 ≤ c ≤ 0.20, 0.30 ≤ d ≤ 0.65, 0 ≤ e ≤ 0.05, and a + b + c + d = 1.).
[3] The curable organopolysiloxane composition according to [1] or [2], wherein component (A1) is included in an amount in the range from 20 to 70 mass% relative to the total amount of components (A1), (A2), and (B).
[4] The curable organopolysiloxane composition according to any one of [1] to [3], wherein component (C) and component (D) both contain a platinum-based metal, and the molar ratio ((C)/(D)) of the amounts of the platinum-based metal in both components is in the range from 0.01 to 200.
[5] The curable organopolysiloxane composition according to any one of [1] to [3], wherein component (A2) contains at least a branched organopolysiloxane.
[6] The curable organopolysiloxane composition according to [5], wherein the branched organopolysiloxane is included in an amount in the range from 1 to 20 mass% relative to the total amount of components (A1), (A2), and (B).
[7] The curable organopolysiloxane composition according to any one of [1] to [6], wherein the amount of a hydrosilylation reaction inhibitor is less than 0.1 mass% relative to the curable organopolysiloxane composition.
[8] The curable organopolysiloxane composition according to any one of [1] to [7], which is a one-component type composition.
[9] The curable organopolysiloxane composition according to any one of [1] to [8], wherein a semi-cured product obtained by irradiating the curable organopolysiloxane composition according to any one of [1] to [8] with a high-energy beam to promote a first hydrosilylation reaction has an adhesive strength of 0.1 MPa or more to a base material.
[10] A cured product of the curable organopolysiloxane composition according to any one of [1] to [9].
[11] A semiconductor device or display device, comprising the cured product according to [10].
[12] A method for manufacturing an organopolysiloxane cured product, the method comprising:
   (i) irradiating the curable organopolysiloxane composition according to any one of [1] to [9] with a high-energy beam to promote a first hydrosilylation reaction, to obtain a semi-cured product; and
   (ii) heating the semi-cured product at a temperature at which component (D) exhibits activity to promote a second hydrosilylation reaction, to obtain a cured product.
[13] The manufacturing method according to [12], wherein the semi-cured product is obtained in the presence of a shield material or structure that partially blocks high-energy beam irradiation.
[14] The manufacturing method according to [12] or [13], wherein (i) and (ii) are performed simultaneously or separately.
[15] A method for manufacturing a semiconductor device or a display device, the method comprising the method according to any one of [12] to [14].

### EFFECT OF THE INVENTION

One embodiment of the present invention provides a curable organopolysiloxane composition capable of providing a semi-cured product that exhibits adhesion to a base material at a stage after irradiation with a high-energy beam. Furthermore, one embodiment of the present invention provides a curable organopolysiloxane composition that has rapid curability and excellent curability in a light-shielded portion. Furthermore, one embodiment of the present invention provides a curable organopolysiloxane composition capable of improving the adhesion of a final cured product itself. The present invention having such effects improves the adhesive stability of a semi-cured product during temporary fixation in the manufacturing of a semiconductor device or the like, and the adhesive stability of a final cured product, which can result in an improvement in overall manufacturing efficiency.

### DESCRIPTION OF THE PREFERRED EMBODIMENTS

For the numerical ranges described in the present specification, the upper and lower limits can be combined as desired. For example, when the numerical range is described as "preferably 30 to 100, more preferably 40 to 80," the ranges "30 to 80" and "40 to 100" are also included in the numerical range described in the present specification. Furthermore, for example, when the numerical range is described as "preferably 30 or more, more preferably 40 or more, and preferably 100 or less, more preferably 80 or less," the ranges "30 to 80" and "40 to 100" are also included in the numerical range described in the present specification.
In addition, as a numerical range described in the present specification, for example, the statement "60 to 100" means that the range is "60 or more and 100 or less".

### 1. Curable Organopolysiloxane Composition

One aspect of the present invention provides a curable organopolysiloxane composition (hereinafter also referred to as "the composition of the present invention"). The composition of the present invention contains: (A1) an organopolysiloxane not having a curing-reactive functional group that contains an aliphatic unsaturated bond in a molecule and containing a siloxane unit expressed by SiO_{4/2} in an amount of at least 20 mol% of all siloxane units; (A2) an organopolysiloxane having at least one monovalent hydrocarbon group that contains an aliphatic unsaturated bond in a molecule; (B) an organohydrogenpolysiloxane containing at least two silicon atom-bonded hydrogen atoms in one molecule; (C) a first hydrosilylation catalyst exhibiting activity upon irradiation with a high-energy beam; and (D) a second hydrosilylation catalyst microencapsulated by a thermoplastic resin having a softening point in the temperature range from 50 to 200°C.
Each component constituting the composition of the present invention will be described in detail below.

### 1.1 Component (A): Organopolysiloxane

Component (A) is an organopolysiloxane serving as a base of the present invention. The composition of the present invention contains, as component (A): (A1) an organopolysiloxane not having a curing-reactive functional group that contains an aliphatic unsaturated bond in a molecule and containing a siloxane unit expressed by SiO_{4/2} in an amount of at least 20 mol% of all siloxane units; and (A2) an organopolysiloxane having at least one monovalent hydrocarbon group that contains an aliphatic unsaturated bond in one molecule.
A conventional dual-cure type curable organopolysiloxane composition can be temporarily fixed to a base material after semi-curing by irradiation with a high-energy beam or the like, but a semi-cured product cured under high-energy beam irradiation conditions (e.g., room temperature of 15 to 30°C) do not exhibit adhesion to the base material.
In contrast, the composition of the present invention contains component (A1), and thus exhibits adhesion to a base material at the stage of a semi-cured product cured by irradiation with a high-energy beam. Therefore, for example, in the manufacturing of a semiconductor device or the like, the temporarily fixed semi-cured product can be prevented from releasing from the base material. Furthermore, the composition of the present invention exhibits adhesion to base material at the semi-cured product stage, making heating for adhesion development unnecessary. Therefore, the composition of the present invention can improve the manufacturing efficiency of a semiconductor device or the like.
Furthermore, the composition of the present invention can also improve the adhesive strength of a final cured product obtained from the semi-cured product. Components (A1) and (A2) will be further described below.

### 1.1.1 Component (A1)

Component (A1) is an organopolysiloxane not having a curing-reactive functional group that contains an aliphatic unsaturated bond in a molecule and containing a siloxane unit expressed by SiO_{4/2} in an amount of at least 20 mol% of all siloxane units.
In one embodiment of the present invention, the proportion of the branched siloxane units expressed by SiO_{4/2} is at least 40 mol% or more, preferably 50 mol% or more, and more preferably in the range from 50 to 65 mol% on the basis of all siloxane units (100 mol%).

In one embodiment of the present invention, component (A1) is an organopolysiloxane having the following average compositional formula (1):

(R¹₃SiO_{1/2})ₐ(R¹₂SiO_{2/2})_{b}(R¹SiO_{3/2})_{c}(SiO_{4/2})_{d}(R²O_{1/2})ₑ (1)

In the abovementioned average compositional formula (1), each R¹ independently represents a monovalent hydrocarbon group with 1 to 10 carbon atoms and no aliphatic unsaturated bonds; R² represents a hydrogen atom or an alkyl group with 1 to 10 carbon atoms; and a, b, c, d, and e are numbers that satisfy the following: 0.35 ≤ a ≤ 0.70, 0 ≤ b ≤ 0.20, 0 ≤ c ≤ 0.20, 0.30 ≤ d ≤ 0.65, 0 ≤ e ≤ 0.05, and a + b + c + d = 1.

Specific examples of monovalent hydrocarbon groups with 1 to 10 carbon atoms and no aliphatic unsaturated bonds that can be selected as R¹ include alkyl groups and aryl groups.
Specific examples of the alkyl group include methyl groups, ethyl groups, n-propyl groups, isopropyl groups, and other propyl groups, n-butyl groups, isobutyl groups, s-butyl groups, t-butyl groups, and other butyl groups, pentyl groups, hexyl groups, heptyl groups, octyl groups, nonyl groups, and decyl groups. Note that these groups also include structural isomers.
Specific examples of the aryl group include phenyl groups, tolyl groups, xylyl groups, and naphthyl groups.
In one embodiment of the present invention, the monovalent hydrocarbon group is preferably an alkyl group with 1 to 6 carbon atoms, more preferably an alkyl group with 1 to 4 carbon atoms, and even more preferably a methyl group.

In one embodiment of the present invention, 70 to 100 mol% of organic groups bonded to silicon atoms in component (A1) are preferably methyl groups, more preferably 80 to 100 mol% are methyl groups, and even more preferably 88 to 100 mol% are methyl groups.
By ensuring that the amount of methyl groups in component (A1) falls within this range, the reinforcing effect and adhesive strength of a cured product containing the siloxane unit expressed by SiO_{4/2} can be improved.

Furthermore, in one embodiment of the present invention, the proportion of the aryl groups in component (A1) relative to all silicon-bonded organic groups is preferably in the range from 0 to 5 mol%, more preferably 0 to 2 mol%, and even more preferably no aryl groups are contained at all (i.e., 0 mol%).
By ensuring that the amount of aryl groups in component (A1) falls within the range above, component (A1) can be prevented from becoming hot-melt, making it easier to obtain a desired liquid composition. Furthermore, the siloxane unit expressed by SiO_{4/2} in a molecule can improve the reinforcing effect of a cured product, improve adhesive strength, and improve the coloration resistance of the cured product at high temperatures.

The alkyl group with 1 to 10 carbon atoms that can be selected as R² may be the same as those described above. In one embodiment of the present invention, R² is preferably a hydrogen atom or an alkyl group with 1 to 6 carbon atoms, more preferably a hydrogen atom or an alkyl group with 1 to 4 carbon atoms, and even more preferably a hydrogen atom or a methyl group.

In the average compositional formula (1) above, a is a number indicating the proportion of siloxane units of the general formula R¹₃SiO_{1/2}. a preferably satisfies 0.35 ≤ a ≤ 0.70, more preferably 0.35 ≤ a ≤ 0.55, and even more preferably 0.40 ≤ a ≤ 0.50.
When a is within the range above, excellent adhesive properties and mechanical strength can be imparted to a cured product containing the composition of the present invention.

In the average compositional formula (1) above, b is a number indicating the proportion of siloxane units of the general formula R¹₂SiO_{2/2}. b preferably satisfies 0 ≤ b ≤ 0.20, and more preferably 0 ≤ b ≤ 0.10.
When b is within the range above, the viscosity of the composition of the present invention can be prevented from becoming too high. In one embodiment of the present invention, b may be 0, and is preferably 0.

In the average compositional formula (1) above, c is a number indicating the proportion of siloxane units of the general formula R¹SiO_{3/2}. c preferably satisfies 0 ≤ c ≤ 0.20, and more preferably 0 ≤ c ≤ 0.10.
When c is within the range above, the viscosity of the composition of the present invention can be prevented from becoming too high, and a resulting cured product can be imparted with excellent mechanical strength. In one embodiment of the present invention, c may be 0, and is preferably 0.

In the average compositional formula (1) above, d is a number indicating the proportion of siloxane units in SiO_{4/2}. d preferably satisfies 0.30 ≤ d ≤ 0.65, and more preferably 0.50 ≤ d ≤ 0.65.
When d is within the range above, excellent adhesive properties and mechanical strength can be imparted to a cured product containing the composition of the present invention.

In the average compositional formula (1) above, e is a number indicating the proportion of units of the general formula R²O_{1/2}. Furthermore, the unit may be a hydroxyl group or an alkoxy group bonded to a silicon atom that may be included in the organopolysiloxane, depending on R². In other words, component (A1) may contain a small amount of hydroxyl groups or alkoxy groups. Specific examples of the alkoxy group include methoxy groups and ethoxy groups. e preferably satisfies 0 ≤ e ≤ 0.05, and more preferably 0 ≤ e ≤ 0.03.

In one embodiment of the present invention, component (A1) is an organopolysiloxane having the following average compositional formula (1-1):

(Me3SiO1/2)a(Me2SiO2/2)b(MeSiO3/2)c(SiO4/2)d(HO1/2)e (1-1)

In the average compositional formula (1-1) above, Me represents a methyl group, and a, b, c, d, and e are numbers that satisfy the following: 0.40 ≤ a ≤ 0.50, 0 ≤ b ≤ 0.10, 0 ≤ c ≤ 0.10, 0.50 ≤ d ≤ 0.65, 0 ≤ e ≤ 0.03, and a + b + c + d = 1.

Component (A1) may be liquid or solid at room temperature.
In one embodiment of the present invention, the organopolysiloxane of component (A1) preferably has a weight average molecular weight (Mw) of 15000 or more, and more preferably in the range from 15000 to 100000, as measured by gel permeation chromatography (GPC) using toluene as a solvent, from the perspective of being able to impart excellent adhesive properties and mechanical strength to a cured product containing the composition of the present invention.

In one embodiment of the present invention, component (A1) is included in an amount in the range preferably from 20 to 70 mass%, more preferably from 25 to 60 mass%, and even more preferably from 30 to 50 mass%, relative to the total amount (100 mass%) of components (A1), (A2), and (B), from the perspective of rapidly promoting semi-curing and improving adhesion of a semi-cured product.

In one embodiment of the present invention, the content ratio [component (A1)/component (A2)] of the amount of component (A1) to the amount of component (A2) (to be described later) may be, in mass ratio, 0.10 or more, 0.30 or more, 0.50 or more, or 0.60 or more.
The content ratio may also be 10.0 or less, 7.00 or less, 5.00 or less, 3.00 or less, 2.00 or less, 1.00 or less, or 0.80 or less.

### 1.1.2 Component (A2)

Component (A2) is an organopolysiloxane having at least one monovalent hydrocarbon group containing an aliphatic unsaturated bond in one molecule, and contains an aliphatic unsaturated hydrocarbon group to which a hydrosilyl group (-SiH) is added during a hydrosilylation reaction.

In one embodiment of the present invention, component (A2) is an organopolysiloxane having the following average compositional formula (2):

R³_{f}R⁴_{g}SiO_{(4-f-g)/2} (2)

In average compositional formula (2) above, R³ represents an alkenyl group with 2 to 12 carbon atoms; R⁴ represents a group selected from the group consisting of alkoxy groups, hydroxyl groups, and monovalent hydrocarbon groups with 1 to 12 carbon atoms and no aliphatic unsaturated bonds; and f and g are numbers that satisfy the following: 1 ≤ f + g ≤ 3 and 0.001 ≤ f/(f + g) ≤ 0.33.

Specific examples of the alkenyl groups with 2 to 12 carbon atoms of R³ include vinyl groups, propenyl groups (including allyl groups), butenyl groups, pentenyl groups, hexenyl groups, heptenyl groups, octenyl groups, nonenyl groups, decenyl groups, undecenyl groups, and dodecenyl groups. Note that these groups also include structural isomers.
In one embodiment of the present invention, the alkenyl group is preferably an alkenyl group with 2 to 10 carbon atoms, more preferably an alkenyl group with 2 to 8 carbon atoms, and still more preferably a group selected from the group consisting of vinyl groups, allyl groups, and hexenyl groups.

Specific examples of the monovalent hydrocarbon groups with 1 to 12 carbon atoms and no aliphatic unsaturated bonds that can be selected as R⁴ include alkyl groups and aryl groups.
Specific examples of the alkyl group include methyl groups, ethyl groups, n-propyl groups, isopropyl groups, and other propyl groups, n-butyl groups, isobutyl groups, s-butyl groups, t-butyl groups, and other butyl groups, pentyl groups, hexyl groups, heptyl groups, octyl groups, nonyl groups, decyl groups, undecyl groups, and dodecyl groups. Note that these groups also include structural isomers.
Specific examples of the aryl group include phenyl groups, tolyl groups, xylyl groups, naphthyl groups, and the like.
In one embodiment of the present invention, the monovalent hydrocarbon group is preferably an alkyl group or aryl group with 1 to 10 carbon atoms, more preferably an alkyl group or aryl group with 1 to 8 carbon atoms, and even more preferably a methyl group or a phenyl group.

Specific examples of the alkoxy group that can be selected as R⁴ include methoxy groups and ethoxy groups.

As described above, in the average compositional formula (2), f and g are numbers that satisfy the following: 1 ≤ f + g ≤ 3 and 0.001 ≤ f/(f + g) ≤ 0.33. When f + g is 1 or more, the flexibility of a cured product can be increased, and when f + g is 3 or less, the mechanical strength of the cured product can be increased.
Furthermore, when f/(f + g) is 0.001 or more, the mechanical strength of the cured product can be increased, and when f/(f + g) is 0.33 or less, the flexibility of the cured product can be increased.

The molecular structure of the organopolysiloxane of component (A2) may be linear, branched, or cyclic. Furthermore, the organopolysiloxane of component (A2) may be a mixture of one or more compounds having such a molecular structure.
In one embodiment of the present invention, component (A2) contains at least a branched organopolysiloxane. Furthermore, in another embodiment of the present invention, component (A2) contains a linear organopolysiloxane and a branched organopolysiloxane.
By including a branched organopolysiloxane as component (A2), a semi-cured product of the composition of the present invention can be more quickly obtained. Furthermore, the adhesive strength of the semi-cured product can also be improved.

The linear organopolysiloxane that may be included as component (A2) may be expressed by the following general formula (3).

R⁵₃SiO(R⁵₂SiO)ₘ₁SiR⁵₃ (3)

In general formula (3) above, each R⁵ independently represents an unsubstituted or halogen-substituted monovalent hydrocarbon group, and in one molecule, at least two R⁵s are monovalent hydrocarbon groups containing an aliphatic unsaturated bond, and the remaining R⁵s are methyl groups or phenyl groups. Examples of the monovalent hydrocarbon group containing an aliphatic unsaturated bond include the abovementioned alkenyl groups with 2 to 12 carbon atoms, and specific examples and preferred groups thereof are as described above.
Furthermore, in general formula (3), m1 may be an integer in the range from 5 to 1000 from the perspective of improving fluidity and precision filling properties. Furthermore, m1 may be an integer greater than 1000. When m1 is an integer greater than 1000, the organopolysiloxane is gum-like at room temperature.

In one embodiment of the present invention, component (A2) contains an organopolysiloxane having two monovalent hydrocarbon groups containing an aliphatic unsaturated bond in one molecule. In another embodiment of the present invention, component (A2) contains a linear organopolysiloxane having monovalent hydrocarbon groups that contains aliphatic unsaturated bonds only at both molecular chain ends.

The branched organopolysiloxane that may be included as component (A2) may be expressed by the following general formula (4).

(R⁶₃SiO_{1/2})ₐ₁(R⁶₂SiO_{2/2})_{b1}(R⁶SiO_{3/2})_{c1}(SiO_{4/2})_{d1}(R⁷O_{1/2})ₑ₁ (4)

In general formula (4) above, each R⁶ independently represents a monovalent hydrocarbon group with 1 to 10 carbon atoms (provided that 1 to 50 mol% of all R^{6s} in one molecule are alkenyl groups); R⁷ represents a hydrogen atom or an alkyl group with 1 to 10 carbon atoms; and a1, b1, c1, d1, and e1 are numbers that satisfy the following: 0.10 ≤ a1 ≤ 0.90, 0 ≤ b1 ≤ 0.70, 0 ≤ c1 ≤ 0.80, 0 ≤ d1 ≤ 0.65, 0 ≤ e1 ≤ 0.05, with the proviso that c1 + d1 > 0.20 and a1 + b1 + c1 + d1 = 1.

Furthermore, in general formula (4) above, the monovalent hydrocarbon group with 1 to 10 carbon atoms that can be selected as R⁶ specifically includes, for example, alkyl groups, alkenyl groups, aryl groups, and the like, and specific examples and preferred groups thereof are as described above. Furthermore, R⁶ may also be an aralkyl group such as a benzyl group. Furthermore, 2 to 45 mol% of all R⁶ groups in one molecule are preferably alkenyl groups, and 2 to 35 mol% of all R⁶ groups in one molecule are more preferably alkenyl groups. By ensuring that the amount of alkenyl groups falls within the range above, the mechanical strength (hardness and the like) of the resulting cured product can be improved.

In general formula (4) above, specific examples and preferred groups of the alkyl group with 1 to 10 carbon atoms that can be selected as R⁷ are as described above. Furthermore, a1 is preferably a number that satisfies 0.15 ≤ a1 ≤ 0.85; b1 is preferably a number that satisfies 0 ≤ b1 ≤ 0.60; and c1 is preferably a number that satisfies 0 ≤ c1 ≤ 0.75, and is more preferably 0. Furthermore, d1 is preferably a number that satisfies 0.15 ≤ d1 ≤ 0.65, and more preferably a number that satisfies 0.20 ≤ d1 ≤ 0.65. Herein, c1 or d1 may be 0, but as described above, c1 + d1 > 0.20. Furthermore, e1 is preferably a number that satisfies 0 ≤ e1 ≤ 0.03.

In one embodiment of the present invention, the branched organopolysiloxane is preferably included in an amount in the range from 1 to 20 mass%, more preferably from 2 to 15 mass%, and even more preferably from 3 to 10 mass%, relative to the total amount (100 mass%) of components (A1), (A2), and (B). This allows a semi-cured product of the composition of the present invention to be obtained more quickly. Furthermore, the adhesive strength of the semi-cured product can also be improved.

In one embodiment of the present invention, the content ratio [linear organopolysiloxane/branched organopolysiloxane] of the amount of the linear organopolysiloxane to the amount of the branched organopolysiloxane that may be included in component (A2) may be, in mass ratio, 20.0 or less, 18.0 or less, 16.0 or less, 14.0 or less, 12.0 or less, or 10.0 or less.
The content ratio may also be 0.10 or more, 0.50 or more, 1.00 or more, 3.00 or more, 5.00 or more, or 6.00 or more.

Component (A2) may be liquid or solid at room temperature. Furthermore, the weight average molecular weight (Mw) of component (A2), as measured by gel permeation chromatography (GPC) using toluene as a solvent, is preferably 20000 or less, more preferably 15000 or less, and particularly preferably in the range from 100 to 15000. By using a component (A2) with a relatively low molecular weight, the viscosity of the entire composition can be reduced.

The amount of component (A2) added is preferably in the range from 1 to 50 mass%, more preferably from 1 to 45 mass%, and even more preferably from 1 to 40 mass%, relative to the total amount (100 mass%) of components (A1) and (A2). By setting the added amount of component (A2) to be in this range, it is possible to balance between the adhesive properties, mechanical strength, and hardness of a cured product obtained from the composition according to one embodiment of the present invention. In particular, when the molecular weight and the amount of alkenyl groups of component (A2) are within the abovementioned preferred ranges, the viscosity of the entire composition and the amount of component (A2) added can be controlled, and the relative amount of component (A1) added can be increased, thereby further improving the adhesion and mechanical strength, such as hardness, of a cured product.

### 1.2 Component (B): Organohydrogenpolysiloxane

Component (B) is an organohydrogenpolysiloxane that serves as a crosslinking agent. The composition of the present invention contains, as component (B), an organohydrogenpolysiloxane containing at least two silicon atom-bonded hydrogen atoms in one molecule.
Component (B) is a compound containing a hydrosilyl group (-SiH) that is added to the monovalent hydrocarbon group having an aliphatic unsaturated bond in the abovementioned component (A2) during a hydrosilylation reaction.

In one embodiment of the present invention, component (B) is an organohydrogenpolysiloxane having the following average compositional formula (5):

HₓR⁸_{y}SiO_{(4-x-y)/2} (5)

In average compositional formula (5) above, R⁸ represents a group selected from the group consisting of hydroxyl groups, alkoxy groups, and monovalent hydrocarbon groups with 1 to 12 carbon atoms and no aliphatic unsaturated bonds; and x and y are numbers that satisfy the following conditions: 1 ≤ x + y ≤ 3 and 0.01 ≤ x/(x + y) ≤ 0.33.

Specific examples of monovalent hydrocarbon groups with 1 to 12 carbon atoms and no aliphatic unsaturated bonds that can be selected as R⁸ include alkyl groups and aryl groups.
Specific examples of the alkyl group include methyl groups, ethyl groups, n-propyl groups, isopropyl groups, and other propyl groups, n-butyl groups, isobutyl groups, s-butyl groups, t-butyl groups, and other butyl groups, pentyl groups, hexyl groups, heptyl groups, octyl groups, nonyl groups, decyl groups, undecyl groups, and dodecyl groups. Note that these groups also include structural isomers.
Specific examples of the aryl group include phenyl groups, tolyl groups, xylyl groups, naphthyl groups, and the like.
In one embodiment of the present invention, the monovalent hydrocarbon group is preferably an alkyl group or aryl group with 1 to 10 carbon atoms, more preferably an alkyl group or aryl group with 1 to 8 carbon atoms, and even more preferably a methyl group or a phenyl group.

Specific examples of the alkoxy group that can be selected as R⁸ include methoxy groups and ethoxy groups.

As described above, in average compositional formula (5) above, x and y are numbers that satisfy 1 ≤ x + y ≤ 3 and 0.01 ≤ x/(x + y) ≤ 0.33, and preferably are numbers that satisfy 1.5 ≤ x + y ≤ 2.5 and 0.05 ≤ x/(x + y) ≤ 0.2. When x + y is 1 or more, the flexibility of a cured product containing the composition of the present invention can be increased. Furthermore, when x + y is 3 or less, the mechanical strength of a cured product containing the composition of the present invention can be increased.
Furthermore, when x/(x + y) is 0.01 or more, the mechanical strength of a cured product containing the composition of the present invention can be increased. Furthermore, when x/(x + y) is 0.33 or less, the flexibility of the cured product containing the composition of the present invention can be increased.

Specific examples of the organohydrogenpolysiloxane of component (B) include 1,1,3-3-tetramethyldisiloxanes, 1,3,5,7-tetramethylcyclotetrasiloxanes, tris(dimethyl hydrogensiloxy)methylsilanes, tris(dimethylhydrogensiloxy)phenylsilanes, 1-(3-glycidoxypropyl)-1,3,5,7-tetramethylcyclotetrasiloxanes, 1,5-di(3-glycidoxypropyl)-1,3,5,7-tetramethylcyclotetrasiloxanes, 1-(3-glycidoxypropyl)-5-trimethoxysilylethyl-1,3,5,7-tetramethylcyclotetrasiloxanes, methylhydrogenpolysiloxanes blocked at both molecular chain ends with a trimethylsiloxy, dimethylsiloxane-methylhydrogensiloxane copolymers blocked at both molecular chain ends with trimethylsiloxy groups, dimethylpolysiloxanes blocked at both molecular chain ends with dimethylhydrogensiloxy groups, dimethylsiloxane-methylhydrogensiloxane copolymers blocked at both molecular chain ends with dimethylhydrogensiloxy groups, methylhydrogensiloxane-diphenylsiloxane copolymers blocked at both molecular chain ends with trimethylsiloxane groups, methylhydrogensiloxane-diphenylsiloxane-dimethylsiloxane copolymers blocked at both molecular chain ends with trimethylsiloxy groups, hydrolysis condensates of trimethoxysilane, copolymers containing (CH₃)₂HSiO_{1/2} units and SiO_{4/2} units, copolymers containing (CH₃)₂HSiO_{1/2} units, SiO_{4/2} units, and (C₆H₅)SiO_{3/2} units, and mixtures of two or more thereof.

In one embodiment of the present invention, the viscosity of the organohydrogenpolysiloxane of component (B) at 25°C is preferably 1 to 10000 mPa·s, more preferably 1 to 5000 mPa·s, and even more preferably 1 to 1000 mPa·s. Note that in the present specification, viscosity (mPa·s) refers to a value measured at 25°C using a Brookfield viscometer.

The amount of component (B) may be such that the amount of silicon atom-bonded hydrogen atoms in component (B) is in the range from 0.1 to 5.0 moles, and preferably from 0.5 to 3.0 moles, per mole of monovalent hydrocarbon groups having an aliphatic unsaturated bond in component (A2). When the amount of component (B) is at or higher than the lower limit of the range above, the mechanical strength of a cured product containing the composition of the present invention can be increased. Furthermore, when the amount is at or lower than the upper limit of the range above, the flexibility of the cured product containing the composition of the present invention can be increased.

### 1.3 Component (C): First Hydrosilylation Catalyst

Component (C) is a first hydrosilylation catalyst that exhibits activity upon irradiation with a high-energy beam, and is referred to as a so-called high-energy beam-activated catalyst or a photoactivated catalyst. Unlike component (D) (to be described later), component (C) is a catalyst that is not microencapsulated. However, component (C) is not activated unless irradiated with a high-energy beam, and the curing reaction does not proceed. Therefore, the pot life of the composition of the present invention can be maintained.
Furthermore, component (C) is characterized in that irradiation with a high-energy beam triggers a rapid curing reaction, enabling rapid curing in a portion irradiated with the high-energy beam, but in a light-shielded portion where the high-energy beam cannot be sufficiently irradiated due to the structure of the object (e.g., the internal structure of a semiconductor component and a closed portion of a display device), curing proceeds gradually at room temperature.
The composition of the present invention is prepared by using component (C) having such features in combination with component (D) (to be described later), such that a curing reaction is more reliably performed throughout the entire composition.
Furthermore, by including the abovementioned component (A1), the composition of the present invention can allow a semi-cured product obtained after irradiation with a high-energy beam to adhere to a base material even if the curing reaction of component (C) is incomplete, which improves the stability of temporary fixation in the manufacturing of, for example, a semiconductor device or the like, and as a result, can improve manufacturing efficiency.

Examples of high-energy beams include ultraviolet rays, X-rays, and electron beams. Of these, ultraviolet rays are preferred from the perspective of catalyst activation efficiency. The amount of the high-energy beam to be applied varies depending on the type of catalyst, but in the case of ultraviolet rays, for example, the cumulative amount of irradiation at a wavelength of 365 nm is preferably in the range from 100 mJ/cm² to 10 J/cm².

Specific examples of component (C) include (methylcyclopentadienyl)trimethylplatinum(IV), (cyclopentadienyl)trimethylplatinum(IV), (1,2,3,4,5-pentamethylcyclopentadienyl)trimethylplatinum(IV), (cyclopentadienyl)dimethylethylplatinum(IV), (cyclopentadienyl)dimethylacetylplatinum(IV), (trimethylsilylcyclopentadienyl)trimethylplatinum(IV), (methoxycarbonylcyclopentadienyl)trimethylplatinum(IV), (dimethylphenylsilylcyclopentadienyl)trimethylcyclopentadienylplatinum(IV), trimethyl(acetylacetonato)platinum(IV), trimethyl(3,5-heptanedionato)platinum(IV), trimethyl(methylacetoacetate)platinum(IV), bis(2,4-pentanedionato)platinum(II), bis(2,4-hexanedionato)platinum(II), bis(2,4-heptanedionato)platinum(II), bis(3,5-heptanedionato)platinum(II), bis(1-phenyl-1,3-butanedionato)platinum(II), bis(1,3-diphenyl-1,3-propanedionato)platinum(II), and bis(hexafluoroacetylacetonato)platinum(II). Of these, (methylcyclopentadienyl)trimethylplatinum(IV) and bis(2,4-pentanedionato)platinum(II) are preferred from the perspective of versatility and ease of availability.

The amount of component (C) is such that metal atoms in the catalyst are in the range from preferably 1 to 50 ppm by mass, and more preferably 5 to 30 ppm by mass, relative to the total amount of the composition.

### 1.4 Component (D): Second Hydrosilylation Catalyst

Component (D) is a second hydrosilylation catalyst microencapsulated by a thermoplastic resin having a softening point in the temperature range from 50 to 200°C. Component (D) is a component that, when used in combination with component (C), can cause the catalyst to respond to heating at a temperature equal to or higher than the softening point, thereby achieving rapid and complete curing, even in a light-shielded portion that cannot be sufficiently irradiated with the high-energy beam, as described above.
Furthermore, component (D) does not basically function as a catalyst at or below the softening point of a thermoplastic resin, and therefore, the curing reaction caused by component (D) does not proceed even when irradiated with the high-energy beam.
Thus, the composition of the present invention combines the different curing properties derived from the two hydrosilylation catalysts. However, in the absence of either trigger (i.e., irradiation with a high-energy beam or heating to a temperature at or higher than the softening point), the catalyst remains inactive, and a curing reaction does not proceed, thereby maintaining favorable pot life.

Specific examples of the second hydrosilylation catalyst used in component (D) include platinum-based catalysts, rhodium-based catalysts, palladium-based catalysts, nickel-based catalysts, iridium-based catalysts, ruthenium-based catalysts, and iron-based catalysts. Of these, platinum-based catalysts are preferred.
Furthermore, the platinum-based catalyst includes platinum-based compounds such as platinum fine powders, platinum black, platinum-supported silica fine powders, platinum-supported activated carbon, chloroplatinic acid, alcohol solutions of chloroplatinic acid, platinum olefin complexes, and platinum alkenylsiloxane complexes. Of these, alkenylsiloxane complexes of platinum are preferred. In particular, a platinum-alkenylsiloxane complex using 1,3-divinyl-1,1,3,3-tetramethyldisiloxane is particularly preferable, due to having favorable stability.

In one embodiment of the present invention, the softening point of the thermoplastic resin used for microcapsules constituting component (D) is preferably 80°C or higher and 160°C or lower. Examples of the thermoplastic resin include polyolefin resins, polystyrene resins, acrylic resins, cellulose resins, thermoplastic silicone resins, and polycarbonate resins.
Note that microencapsulated hydrosilylation catalysts are described in JP H2-9448 A and JP H2-14244 A, and can be prepared by methods described therein.

Furthermore, component (D) exhibits catalytic activity by releasing or diffusing the catalyst at a temperature at or higher than the softening point of the thermoplastic resin used for microencapsulation. Thus, the temperature at which catalytic activity is exhibited varies depending on the type of thermoplastic resin, but is typically 80°C or higher, preferably 100°C or higher, and more preferably 120°C or higher.

The amount of component (D) is such that metal atoms in the catalyst are in the range from 0.1 to 50 ppm by mass, preferably 0.5 to 30 ppm by mass, and more preferably 1 to 10 ppm by mass, relative to the total amount of the composition.

In the composition according to one embodiment of the present invention, both component (C) and component (D) contain a platinum-based metal. In this embodiment, the molar ratio ((C)/(D)) of the amount of platinum-based metal in component (C) to the amount of platinum-based metal in component (D) is usually in the range from 0.01 to 200, and preferably 0.1 to 100.
When the molar ratio is equal to or less than the upper limit, a curing reaction at high temperatures can be accelerated. When the molar ratio is equal to or greater than the lower limit, the curing reaction can be performed in a short period of time at low temperatures.
Note that when emphasis is placed on rapid curing by irradiation with a high-energy beam, the amount of component (C) is preferably greater than the amount of component (D).

### 1.5 Optional Components

In addition to component (A), which includes component (A1) and component (A2), component (B), component (C), and component (D), the composition according to one embodiment of the present invention may contain, as necessary: another organopolysiloxane; an adhesion-imparting agent; an inorganic filler such as silica, glass, alumina, and zinc oxide; an organic resin fine powder such as polymethacrylates; a phosphor; a heat-resistant agent; a dye; a pigment; a flame retardant; a solvent; or the like.

In one embodiment of the present invention, the adhesion-imparting agent may be represented, for example, by the following structural formula (where Me represents a methyl group):

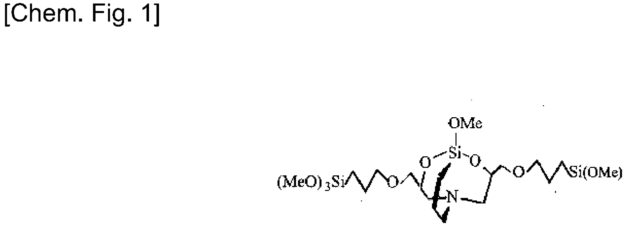

In one embodiment of the present invention, the amount of the adhesion-imparting agent may be 0.01 to 5.0 mass%, 0.1 to 2.5 mass%, 0.4 to 1.5 mass%, or 0.5 to 1.0 mass%, on the basis of the total amount (100 mass%) of the composition.

Furthermore, the composition according to one embodiment of the present invention is preferably substantially free of a hydrosilylation reaction inhibitor. Normally, a hydrosilylation reaction inhibitor is added to a curable composition that cures via a hydrosilylation reaction in order to improve pot life and obtain a stable composition. However, the hydrosilylation reaction inhibitor also has the function of inhibiting the curing reaction of the composition.
However, in the composition of the present invention, components (C) and (D) are inactive as catalysts until respective triggers thereof are applied, and in the composition according to one embodiment of the present invention, the amount of curing-reactive functional groups in component (A) is also suppressed.
Therefore, the composition according to one embodiment of the present invention has a pot life sufficient for practical use even without the use of a hydrosilylation reaction inhibitor. In the composition according to one embodiment of the present invention, specifically, the amount of the hydrosilylation reaction inhibitor is preferably less than 0.1 mass%, and more preferably less than 0.01 mass%, relative to the total amount (100 mass%) of the composition, or preferably an amount below the detection limit.

Specific examples of the hydrosilylation reaction inhibitor include acetylenic compounds such as 3-methyl-1-butyn-3-ol, 3,5-dimethyl-1-hexyn-3-ol, 3-phenyl-1-butyn-3-ol, and 1-ethynyl-1-cyclohexanol; enyne compounds such as 3-methyl-3-penten-1-yne and 3,5-dimethyl-3-hexen-1-yne; cycloalkenylsiloxanes such as 1,3,5,7-tetramethyl-1,3,5,7-tetravinylcyclotetrasiloxane and 1,3,5,7-tetramethyl-1,3,5,7-tetrahexenylcyclotetrasiloxane; methylvinylsiloxane oligomers blocked at both ends with hydroxyl groups or modified, and methylvinyldimethylsiloxane oligomers blocked at both ends with hydroxyl groups or modified; and triazole compounds such as benzotriazole.

### 1.6 Manufacturing Method and Form of the Composition of the Present Invention

The composition according to one embodiment of the present invention can be manufactured by uniformly mixing component (A), which includes component (A1) and component (A2), component (B), component (C), and component (D), as well as any optional components used as needed, at room temperature by mechanical force using a mixer or the like.
Furthermore, the composition according to one embodiment of the present invention may be a composition having one comp (one-component type), or may be a multi-component type composition having two or more components (two-component type), the compositions having at least hydrosilylation reaction curability. The composition according to one embodiment of the present invention, even as a one-component type composition, can be stored over a long period of time by sealing the composition in a sealed container at room temperature without using a hydrosilylation reaction inhibitor, and has a pot life sufficient for practical use.

### 1.7 Properties of Semi-Cured Product Containing Composition of the Present Invention

A semi-cured product obtained by irradiating the composition according to one embodiment of the present invention with high-energy beam irradiation to promote the first hydrosilylation reaction has an adhesive strength to a base material (e.g., glass, aluminum plate, or the like) of preferably 0.1 MPa or more, more preferably 0.5 MPa or more, and even more preferably 1.0 MPa or more. The method for measuring the adhesive strength will be described in the Examples below.
When the semi-cured product has an adhesive strength within the range above, the stability of temporary fixation in the manufacturing of, for example, a semiconductor device or the like is improved, and as a result, manufacturing efficiency can be improved.

### 1.8 Method of Applying Composition of the Present Invention

The composition of the present invention can be applied to an object using a known coating method or injecting method, and cured by the method for manufacturing a cured product (to be described later).
The composition of the present invention can be applied, for example, to adhering between members, as well as to the interior of a member and to a region between and inside members that include light-shielded portions, such as fine irregularities or narrow gap structures. Therefore, the composition of the present invention is preferably applied or injected onto an object using a dispenser. This also allows for precise, fine and/or small volume application or injection. The dispenser may be air-operated, valve-operated, screw-operated, positive displacement, or jet-operated.

Furthermore, as described above, in the composition of the present invention, the catalyst is not activated at temperatures at or below the softening point or glass transition point of the thermoplastic resin serving as a wall material of component (D). Therefore, in order to ensure the fluidity of the composition, when the composition of the present invention is applied to an object, the composition can be heated within a temperature range in which component (D) is not activated. This can improve the fluidity, close-filling properties and/or coating properties of the composition of the present invention.

### 2. Method for Manufacturing Organopolysiloxane Cured Product

The present invention provides, as one aspect, a method for manufacturing an organopolysiloxane cured product obtained by curing the curable organopolysiloxane composition described above in "1. Curable Organopolysiloxane Composition" (hereinafter also referred to as the "manufacturing method of the present invention"). The manufacturing method of the present invention includes at least the following (i) and (ii):
(i) irradiating the curable organopolysiloxane composition described in "1. Curable Organopolysiloxane Composition" above with a high-energy beam to promote a first hydrosilylation reaction, to obtain a semi-cured product; and
(ii) heating the semi-cured product at a temperature at which component (D) exhibits activity to promote a second hydrosilylation reaction, to obtain a cured product.

The abovementioned (i) and (ii) may be performed simultaneously or separately.
The phrase "simultaneously" performing the abovementioned (i) and (ii) does not necessarily mean that irradiation of the high-energy beam and heating are started at the same time. In other words, the heating (ii) may be started during the irradiation of a high-energy beam (i). Furthermore, the irradiation of the high-energy beam in (i) may be started during the heating in (ii).

The phrase "separately" performing the abovementioned (i) and (ii) means that after one of the processes of the irradiation of a high-energy beam of (i) and the heating of (ii) is completed, the other process is started.
When the abovementioned (i) and (ii) are performed separately, either (i) or (ii) may be performed first. However, from the perspective of obtaining the effect of stability of temporary fixation by adhesion of a semi-cured product to a base material, which is a feature of the present invention, (i) is preferably performed first.

### 2.1 Regarding (i) above

In the abovementioned (i), only component (C) of the composition of the present invention is activated by irradiation with the high-energy beam, and the composition rapidly becomes a semi-cured product through a first hydrosilylation reaction.
In the abovementioned (i), the timing of irradiation with the high-energy beam is arbitrary, and the high-energy beam may be irradiated immediately before the composition is applied to the object. Furthermore, thereafter, the high-energy beam may be further supplementarily irradiated. The amount of irradiation of the high-energy beam is as described above in "1. Curable Organopolysiloxane Composition", but is not limited to this irradiation amount, and any amount of irradiation may be used so long as a semi-cured product of the composition of the present invention can be obtained.

In one embodiment of the present invention, the abovementioned (i) may be performed in the presence of a shield material or structure that partially blocks high-energy beam irradiation. Even when a high-energy beam is irradiated under such an environment, a curing reaction can proceed even in a light-shielded portion due to the abovementioned (ii).
Alternatively, in the abovementioned (i), the high-energy beam may be irradiated using a light source that is less likely to produce a light-shielded portion, such as a spot UV light source, to rapidly promote the first hydrosilylation reaction in (i).

### 2.2 Regarding (ii) above

In the abovementioned (ii), the composition of the present invention, in a state in which component (C) is activated, is further heated at a temperature at which component (D) exhibits activity, and undergoes a second hydrosilylation reaction to form a final cured product.
The heating temperature in (ii) must be higher than the softening point or glass transition point of the thermoplastic resin serving as a wall material of a microcapsule encapsulating the catalyst of component (D). Specifically, although the temperature differs depending on the thermoplastic resin, the temperature may be, for example, 80°C or higher, 100°C or higher, or 120°C or higher, and may be 200°C or lower, 180°C or lower, or 160°C or lower.
Furthermore, the heating time varies depending on the type and added amount of each component of the composition of the present invention and the heating temperature, but is usually 1 minute to 10 hours, preferably 3 minutes to 5 hours, and more preferably 5 minutes to 2 hours.

### 3. Semiconductor Device and Display Device

The present invention provides, as one aspect, a semiconductor device or a display device (hereinafter also referred to as the "semiconductor device or display device of the present invention"). The semiconductor device or display device of the present invention is obtained by including a cured product of the curable organopolysiloxane composition described above in "1. Curable Organopolysiloxane Composition".
The semiconductor device specifically includes, for example, any semiconductor device such as optical semiconductors, light-emitting semiconductors, power semiconductors, light reflectors, semiconductor elements, IC chips, and other semiconductor members.
The display device includes any display or the like.

### 4. Method for Manufacturing Semiconductor Device and Display Device

The present invention provides, as one aspect, a method for manufacturing a semiconductor device or a display device (hereinafter also referred to as the "method for manufacturing a semiconductor device or display device of the present invention"). The method for manufacturing a semiconductor device or display device of the present invention includes (i) and (ii) in the manufacturing method of the present invention described above in "2. Method for Manufacturing Organopolysiloxane Cured Product".
Furthermore, in one embodiment of the method for manufacturing a semiconductor device or display device of the present invention, the composition of the present invention is applied to an object as described above in "1.8 Method of Applying Composition of the Present Invention", and then (i) and (ii) of the manufacturing method of the present invention described above in "2. Method for Manufacturing Organopolysiloxane Cured Product" are performed.
In the method for manufacturing a semiconductor device or display device of the present invention, the composition of the present invention contains component (A1). Therefore, even if the curing reaction by component (C) is incomplete, a semi-cured product obtained after irradiation with a high-energy beam can be adhered to a base material, thereby improving the stability of temporary fixation for aligning members and, as a result, improving manufacturing efficiency.

### EXAMPLES

The present invention is further described below on the basis of Examples, but the present invention is not limited to the Examples below.

Curable organopolysiloxane compositions containing the following components according to the formulations in Table 1 were obtained. Thereafter, a curing reaction was performed under the following conditions, and the rapid curability of the compositions by UV and the curability of the light-shielded portion were evaluated. Furthermore, semi-cured products obtained by rapid UV curing were subjected to an adhesion test according to the following method to evaluate the adhesion thereof to a base material. The results of these evaluations are depicted in Table 1. Note that in each average compositional formula, Me, Vi, and Ph represent a methyl group, a vinyl group, and a phenyl group, respectively.

### Component (A)

- Component (A1): Organopolysiloxane as expressed by the average unit formula:

   (Me3SiO1/2)0.44(SiO4/2)0.56(HO1/2)0.02

   (amount of vinyl groups = 0 mol%, weight average molecular weight (Mw) = 18,500 (as measured by GPC using toluene as a solvent))
- Component (A2-1): Linear polydimethylsiloxane blocked at both ends with dimethylvinyl groups, expressed by the average unit formula:

   ViMe₂SiO(Me₂SiO)₃₀₀SiViMe₂

   (amount of vinyl groups = 0.23 mass%)
- Component (A2-2): Linear polydimethylsiloxane blocked at both ends with dimethylvinyl groups, expressed by the average unit formula:

   ViMe₂SiO(Me₂SiO)₁₄₀SiViMe₂

   (amount of vinyl groups = 0.44 mass%)
- Component (A2-3): Masterbatch of 80 mass% of the abovementioned component (A2-1) and 20 mass% of silazane-treated dry silica (average primary particle size: 0.1 to 0.2 µm (as measured by laser diffraction/scattering method))
- Component (A2-4): Branched polydimethylsiloxane expressed by the average unit formula:

   Si(OSiMe₂Vi)₄

   (amount of vinyl groups = 27 mass%)
- Component (A2-5): Branched polydimethylsiloxane expressed by the average unit formula:

   PhSi(OSiMe₂Vi)₃

   (amount of vinyl groups = 21 mass%)
Note that the abovementioned component (A1) is an organopolysiloxane not having a curing-reactive functional group that contains an aliphatic unsaturated bond in a molecule and containing a siloxane unit expressed by SiO_{4/2} in an amount of at least 20 mol% of all siloxane units. Furthermore, the abovementioned components (A2-1) to (A2-5) are all organopolysiloxanes having at least one monovalent hydrocarbon group that contains an aliphatic unsaturated bond in one molecule.

### Component (B)

· Component (B1): Copolymer of methylhydrogensiloxane/dimethylsiloxane blocked with trimethylsiloxy groups at both molecular chain ends (amount of silicon atom-bonded hydrogen atoms = 0.7 mass%)
· Component (B2): Dimethylsiloxane blocked with dimethylhydrogensiloxy groups at both molecular chain ends (amount of silicon atom-bonded hydrogen atoms = 0.13 mass%)
· Component (B3): Branched organohydrogenpolysiloxane expressed by the average unit formula:

   (PhSiO_{3/2})_{0.4}(HMe₂SiO_{1/2})_{0.6}

   (amount of SiH groups = 0.62 mass%)
· Component (B4): Branched organohydrogenpolysiloxane expressed by the average unit formula:

   (HMe2SiO1/2)0.52(Me2SiO2/2)0.15(SiO4/2)0.33

   (amount of SiH groups = 0.79 mass%)
Note that the abovementioned components (B1) to (B4) are organohydrogenpolysiloxanes containing at least two silicon atom-bonded hydrogen atoms in one molecule.

### Component (C)

- Component (C1): (Methylcyclopentadienyl)trimethylplatinum(IV) complex (curing reaction catalyst for promoting a hydrosilylation reaction upon exposure to ultraviolet (UV) rays)

### Component (D)

· Component (D1): Platinum-1,3-divinyl-1,1,3,3-tetramethyldisiloxane complex dispersed in polycarbonate microcapsules (softening point = 150°C) with an average particle size of 2 µm (amount of platinum atoms = 4000 ppm by mass) · Component (D2): Platinum-1,3-divinyl-1,1,3,3-tetramethyldisiloxane complex dispersed in acrylic resin microcapsules (softening point = 100°C) with an average particle size of 2 µm (amount of platinum atoms = 4000 ppm by mass)

### Other Components

- Adhesion-imparting agent expressed by the following structural formula (where Me represents a methyl group):

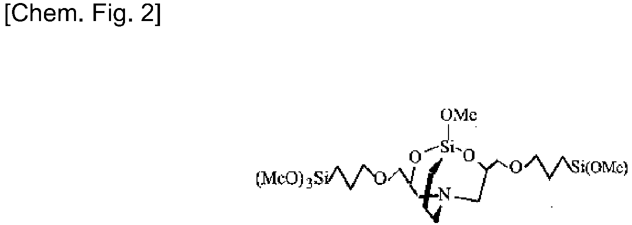

### Fast UV Curability

0.1 mL of the liquid composition of each sample prepared was dripped onto an aluminum plate, and irradiated with UV light from the following ultraviolet (UV) light source at an irradiation dose of 4 J/cm².
Light source: UV LED spot light: ULEDN-101 (NS-Lighting Co. Ltd.)
Wavelength: 365 nm
Irradiation dose: UV energy: 4000mW/cm² as maximum
Ten minutes after the start of UV light irradiation, the surface of the composition (semi-cured product) after UV irradiation was touched by hand, and the composition was rated as cured if tacky, and if not tacky, the composition was rated as uncured.

### Curability of Light-Shielded Portion

The liquid composition of each sample prepared was applied to an aluminum plate to a width of 25 mm, length of 75 mm, and thickness of 1.0 mm. The composition was then covered with an aluminum plate to shield the composition from light, and irradiated with the same UV light as above at an irradiation dose of 4 J/cm². Thereafter, the adhesive was thermally cured in a circulating oven (150°C, 1 hour). Curing of the light-shielded portion was evaluated by removing the lid of the aluminum plate and determining whether the composition (cured product) was adhered to the coated aluminum plate. Furthermore, when the composition (cured product) was tacky and could be released from the aluminum plate on which the composition was applied, the composition was evaluated as being uncured.

### Curability of Light-Shielded Portion

0.1 mL of the liquid composition of each sample prepared was dripped onto an aluminum plate, and irradiated with the same UV light at an irradiation dose of 4 J/cm². The aluminum plate was placed on a glass base material and aged at room temperature for 30 minutes. The adhesive strength of the composition (semi-cured product) was evaluated by a die shear test based on JIS K6854-2.

### [Table 1]

**Table 1**

| | | | Units | Comparative Example 1 | Comparative Example 2 | Example 1 | Example 2 |
|---|---|---|---|---|---|---|---|
| | Component (A) | Component (A1) | mass% | | | 36.1 | 35.8 |
| | | Component (A2-1) | mass% | 77.5 | | 36.1 | 40.9 |
| | | Component (A2-2) | mass% | | 94.1 | 8.39 | 6.44 |
| | | Component (A2-3) | mass% | 20.0 | | | |
| | | Component (A2-4) | mass% | | | 4.51 | |
| | | Component (A2-5) | mass% | | | | 7.60 |
| | Component (B) | Component (B1) | mass% | 1.86 | 3.10 | 4.51 | |
| | | Component (B2) | mass% | | 2.20 | | |
| Composition | | Component (B3) | mass% | | | 8.39 | |
| | | Component (B4) | mass% | | | | 7.15 |
| | Component (C) | Component (C1) | mass% | 0.17 | 0.17 | 0.84 | 1.00 |
| | Component (D) | Component (D1) | mass% | 0.12 | | | |
| | | Component (D2) | mass% | | | 0.19 | 0.19 |
| | Other components | Adhesion-imparting agent | mass% | 0.40 | 0.40 | 0.99 | 0.99 |
| | Total | | mass% | 100 | 100 | 100 | 100 |
| | Component (A1)/Component (A2) | | | - | - | 0.74 | 0.65 |
| | Component (A2 - 1) + Component (A2 - 2) + Component (A2 - 3)/Component (A2 - 4) + Component (A2 - 5) | | | - | - | 9.86 | 6.23 |
| Evaluation | Fast curability with UV | | | Cured | Cured | Cured | Cured |
| | Curability of Light Shielded Portion | | | Cured | Uncured | Cured | Cured |
| | Initial adhesion to glass base material after UV curing | | | 0 MPa | 0 MPa | 1.0 MPa | 1.1 MPa |

As depicted in Table 1, the compositions of Examples 1 and 2 containing both component (C) and component (D) exhibited favorable rapid UV curability and favorable curability in the light-shielded portions. Furthermore, the compositions of Examples 1 and 2 containing component (A1) had high adhesion to the glass base material after UV curing.
On the other hand, the composition of Comparative Example 2, which did not contain component (D), exhibited inferior curability in the light-shielded portion. Furthermore, the compositions of Comparative Examples 1 and 2, which did not contain component (A1), did not exhibit adhesion to the glass base material after UV curing.
In light of the foregoing, it was found that the composition of the present invention containing component (A1), component (A2), component (B), component (C), and component (D) exhibited favorable rapid curability when irradiated with a high-energy beam and favorable curability in a light-shielded portion after thermal curing, and also has excellent adhesion to a base material after UV curing, thereby enabling improvement in the stability of temporary fixation in the manufacturing of a semiconductor device or the like.

## Claims

1. A curable organopolysiloxane composition, comprising:
(A1) an organopolysiloxane not having a curing-reactive functional group that contains an aliphatic unsaturated bond in a molecule and containing a siloxane unit expressed by SiO_{4/2} in an amount of at least 20 mol% of all siloxane units;
(A2) an organopolysiloxane having at least one monovalent hydrocarbon group that contains an aliphatic unsaturated bond in a molecule;
(B) an organohydrogenpolysiloxane containing at least two silicon atom-bonded hydrogen atoms in one molecule;
(C) a first hydrosilylation catalyst exhibiting activity upon irradiation with a high-energy beam; and
(D) a second hydrosilylation catalyst microencapsulated by a thermoplastic resin having a softening point in the temperature range from 50 to 200°C.

2. The curable organopolysiloxane composition according to claim 1, wherein component (A1) is an organopolysiloxane expressed by the following average unit formula (1):
(R¹₃SiO_{1/2})ₐ(R¹₂SiO_{2/2})_{b}(R¹SiO_{3/2})_{c}(SiO_{4/2})_{d}(R²O_{1/2})ₑ (1)
(where each R¹ independently represents a monovalent hydrocarbon group with 1 to 10 carbon atoms and no aliphatic unsaturated bonds; R² represents a hydrogen atom or an alkyl group with 1 to 10 carbon atoms; and a, b, c, d, and e are numbers that satisfy the following: 0.35 ≤ a ≤ 0.70, 0 ≤ b ≤ 0.20, 0 ≤ c ≤ 0.20, 0.30 ≤ d ≤ 0.65, 0 ≤ e ≤ 0.05, and a + b + c + d = 1.).

3. The curable organopolysiloxane composition according to claim 1, wherein component (A1) is included in an amount in the range from 20 to 70 mass% relative to the total amount of components (A1), (A2), and (B).

4. The curable organopolysiloxane composition according to claim 1, wherein component (C) and component (D) both contain a platinum-based metal, and the molar ratio ((C)/(D)) of the amounts of the platinum-based metal in both components is in the range from 0.01 to 200.

5. The curable organopolysiloxane composition according to claim 1, wherein component (A2) contains at least a branched organopolysiloxane.

6. The curable organopolysiloxane composition according to claim 5, wherein the branched organopolysiloxane is included in an amount in the range from 1 to 20 mass% relative to the total amount of components (A1), (A2), and (B).

7. The curable organopolysiloxane composition according to claim 1, wherein the amount of a hydrosilylation reaction inhibitor is less than 0.1 mass% relative to the curable organopolysiloxane composition.

8. The curable organopolysiloxane composition according to claim 1, which is a one-component type composition.

9. The curable organopolysiloxane composition according to claim 1, wherein a semi-cured product obtained by irradiating the curable organopolysiloxane composition according to claim 1 with a high-energy beam to promote a first hydrosilylation reaction has an adhesive strength of 0.1 MPa or more to a base material.

10. A cured product of the curable organopolysiloxane composition according to any one of claims 1 to 9.

11. A semiconductor device or display device, comprising the cured product according to claim 10.

12. A method for manufacturing an organopolysiloxane cured product, the method comprising:
(i) irradiating the curable organopolysiloxane composition according to any one of claims 1 to 9 with a high-energy beam to promote a first hydrosilylation reaction, to obtain a semi-cured product; and
(ii) heating the semi-cured product at a temperature at which component (D) exhibits activity to promote a second hydrosilylation reaction, to obtain a cured product.

13. The manufacturing method according to claim 12, wherein the semi-cured product is obtained in the presence of a shield material or structure that partially blocks the high-energy beam irradiation.

14. The manufacturing method according to claim 12, wherein (i) and (ii) are performed simultaneously or separately.

15. A method for manufacturing a semiconductor device or a display device, the method comprising the method according to claim 12.
